(19) **Europäisches Patentamt**
**European Patent Office**
**Office européen des brevets**

(11) **EP 4 081 773 B1**

(12) **EUROPÄISCHE PATENTSCHRIFT**

(45) Veröffentlichungstag und Bekanntmachung des Hinweises auf die Patenterteilung:
**16.04.2025 Patentblatt 2025/16**

(21) Anmeldenummer: **20820921.3**

(22) Anmeldetag: **08.12.2020**

(51) Internationale Patentklassifikation (IPC):
**G01L 5/16** *(2020.01)*  **G01L 1/04** *(2006.01)*
**G01G 3/12** *(2006.01)*  **G01G 21/24** *(2006.01)*

(52) Gemeinsame Patentklassifikation (CPC):
**G01L 1/04; G01G 3/12; G01G 21/244; G01L 5/16**

(86) Internationale Anmeldenummer:
**PCT/EP2020/085103**

(87) Internationale Veröffentlichungsnummer:
**WO 2021/130014 (01.07.2021 Gazette 2021/26)**

(54) **VORRICHTUNG ZUR MESSUNG EINER LÄNGENÄNDERUNG**

DEVICE FOR MEASURING A CHANGE IN LENGTH

DISPOSITIF DE MESURE DE CHANGEMENT DE LONGUEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **23.12.2019 DE 102019135732**

(43) Veröffentlichungstag der Anmeldung:
**02.11.2022 Patentblatt 2022/44**

(73) Patentinhaber: **Neura Robotics GmbH**
**72555 Metzingen (DE)**

(72) Erfinder:
• **VON STÜRMER, Philipp**
**22035 Hamburg (DE)**
• **SIRAKY, Josef**
**78166 Donaueschingen (DE)**

• **REGER, David**
**72555 Metzingen (DE)**
• **SUSEMIHL, Hendrik**
**22087 Hamburg (DE)**
• **STAUDE, Till**
**Hamburg 21075 (DE)**
• **BROCKMANN, Jannick**
**22083 Hamburg (DE)**

(74) Vertreter: **Westphal, Mussgnug & Partner**
**Patentanwälte mbB**
**Am Riettor 5**
**78048 Villingen-Schwenningen (DE)**

(56) Entgegenhaltungen:
**EP-A1- 0 945 717    EP-A2- 0 706 035**
**EP-B1- 0 706 035    EP-B1- 0 945 717**
**US-A- 4 544 858**

**Beschreibung**

Die Erfindung betrifft eine Vorrichtung zur Messung einer Längenänderung gemäß dem Oberbegriff des Patentanspruchs 1.

In der Automatisierungstechnik werden vielfach 6-Achs-Kraft-Momentensensoren eingesetzt, um die wirkenden Kräfte und Drehmomente in allen Richtungen bestimmen zu können. Beispielsweise können derartige Sensoren zur Anwendung beim automatischen Fügen oder Montieren von Werkstücken, beim Entgraten, Polieren oder Schleifen, bei Haptikmessungen oder anderen Einsatzgebieten. Diese Sensoren messen die auf sie einwirkenden Kräfte (Fx, Fy, Fz) und Drehmomente (Mx, My, Mz) in und um drei Koordinaten (x, y, z). Derartige Sensoren sollen einerseits möglichst steif ausgebildet sein, damit sie selbst keine Verformungen durch die Kräfte oder Drehmomente erfahren. Andererseits sollen aber möglichst hohe Auflösungen der gemessenen Signale erreicht werden können, was durch steife Sensoren in der Regel nicht möglich ist. Bei den bekannten Sensoren werden zur Bestimmung der Kräfte und Drehmomente Dehnmessstreifen verwendet, mit welchen sehr geringe Materialdehnungen gemessen werden können. Allerdings ist es sehr aufwendig, die Dehnmessstreifen zu applizieren. Zudem benötigen Dehnmessstreifen eine hohe Signalverstärkung, was zu großen Kosten derartiger 6-Achs-Kraft-Momentensensoren führt. Das Dokument US 4 544 858 beschreibt eine Vorrichtung, welche zur Messung von Gewichten mittels einer Frequenzmessung verwendet wird.

Die Aufgabe der Erfindung besteht daher darin, eine Vorrichtung zur Messung einer Längenänderung insbesondere zur Anwendung in 6-Achs-Kraft-Momentensensoren bereitzustellen, welche bei einer hohen Steifigkeit eine hohe Auflösung der gemessenen Signale erreichen kann.

Die Aufgabe wird erfindungsgemäß gelöst durch eine Vorrichtung zur Messung der Längenänderung mit den Merkmalen des Patentanspruchs 1.

Vorteilhafte Ausgestaltungen und Weiterbildungen der Erfindung sind in den abhängigen Ansprüchen angegeben.

Die erfindungsgemäße Vorrichtung zur Messung einer Längenänderung mit einem ersten Befestigungselement, einem zweiten Befestigungselement und wenigstens einem zwischen den beiden Befestigungselementen angeordneten Längenelement mit einem ersten Ende, einem zweiten Ende und einer Länge entlang einer Längsrichtung, wobei eine parallel zur Längsrichtung wirkende Kraft zu einer Längenänderung des Längenelements führt, zeichnet sich dadurch aus, dass quer zur Längsrichtung ein Hebelelement mit einem ersten Ende, einem zweiten Ende und einem Drehpunkt angeordnet ist, wobei das Hebelelement einen ersten Hebelarm mit einer ersten Länge zwischen dem Drehpunkt und einem ersten Hebelarmende und einen zweiten Hebelarm mit einer zweiten Länge zwischen dem Drehpunkt und einem zweiten Hebelarmende aufweist, wobei die zweite Länge größer ausgebildet ist als die erste Länge, dass das Längenelement mit seinem ersten Ende verschwenkbar am ersten Hebelarmende des ersten Hebelarms angeordnet ist und wobei das zweite Hebelarmende des zweiten Hebelarms mit einer Massverkörperung verbunden ist, deren Bewegung durch ein Abtastelement erfassbar ist.

Die grundlegende Idee der Erfindung beruht mit anderen Worten darauf, die Längenveränderung durch ein Hebelelement mechanisch zu verstärken und die Wegänderung am freien Ende des längeren Hebelarms zu erfassen. Eine derartige mechanische Verstärkung ist einfach und kostengünstig zu realisieren. Sie kann insbesondere bei Systemen mit einer hohen Steifigkeit zur Anwendung kommen, wobei trotz der hohen Steifigkeit durch die mechanische Verstärkung eine hohe Auflösung der durch eine Kraft oder ein Drehmoment bewirkten Längenänderung erreicht werden kann.

In einer bevorzugten Ausführungsform der Erfindung ist der Drehpunkt zwischen dem ersten Ende und dem zweiten Ende des Hebelelements angeordnet und das erste Hebelarmende des ersten Hebelarms bildet das erste Ende des Hebelelements, während das zweite Hebelarmende des zweiten Hebelarms das zweite Ende des Hebelelements bildet. Auf diese Weise wird ein zweiseitiger Hebel gebildet.

In einer alternativen bevorzugten Ausführungsform der Erfindung ist der Drehpunkt an dem ersten Ende des Hebelelements angeordnet. Auf diese Weise wird ein einseitiger Hebel gebildet.

Eine bevorzugte Weiterbildung der Erfindung sieht vor, dass ein zweites Element, welches ein erstes Ende und ein zweites Ende aufweist und welches mittels eines ersten Arms und eines zweiten Arms, welche parallel zueinander ausgerichtet sind, parallel zu dem Hebelelement angeordnet ist, wobei die Anordnung zwischen dem zweiten Element und dem ersten Arm, zwischen dem zweiten Element und dem zweiten Arm, zwischen dem Hebelelement und dem ersten Arm und zwischen dem Hebelelement und dem zweiten Arm schwenkbar ist. Auf diese Weise wird ein Parallelogramm gebildet, welches es ermöglicht, die am zweiten Hebelarmende des zweiten Hebelarms angeordnete Massverkörperung, welche ohne das zweite Element bei einer Schwenkbewegung des Hebelelements gegen das Abtastelement verkippt, bei einer Schwenkbewegung des Hebelelements durch das zweite Element parallel zur Längsrichtung ausgerichtet zu führen.

Vorzugsweise ist die Massverkörperung an dem zweiten Arm angeordnet, wobei sie sich vorzugsweise über den Abstand zwischen dem Hebelelement und dem zweiten Element erstreckt. Dies ermöglicht bei einer Schwenkbewegung des Hebelelements die Massverkörperung in jeder Position parallel zur Längsrichtung ausgerichtet anzuordnen.

Eine gute Stabilität der Hebelanordnung kann erreicht werden, wenn vorzugsweise der erste Arm zwischen dem Drehpunkt und dem ersten Ende des zweiten Elements und der zweite Arm zwischen dem zweiten Ende des Hebelelements und dem zweiten Ende des zweiten Elements angeordnet ist.

Eine besonders bevorzugte Ausführungsform der Erfindung sieht vor, dass die schwenkbaren Verbindungen nach Art eines Filmscharniers ausgebildet sind. Derartige schwenkbare Verbindungen lassen sich durch Materialschwächungen auch in Materialien mit hoher Steifigkeit einfach ausbilden, so dass einerseits die gewünschte hohe Steifigkeit des Längenelements nicht oder nur kaum beeinträchtigt wird, andererseits aber die gewünschte hohe Auflösung durch die mechanische Verstärkung durch die Hebelanordnung erreicht werden kann.

Vorzugsweise sind das erste Befestigungselement scheibenartig mit einer ersten Ebene und das zweite Befestigungselement scheibenartig mit einer zweiten Ebene ausgebildet, wobei die erste Ebene und die zweite Ebene parallel zueinander angeordnet sind und vorzugsweise die Längsrichtung senkrecht zu den Ebenen angeordnet ist. Die scheibenartige Ausbildung der Befestigungselemente ermöglicht eine gute Befestigung an den relativ zueinander zu bewegenden Komponenten, zwischen denen die auftretenden Kräfte und Drehmomente gemessen werden sollen.

Die Anordnung der Ebenen senkrecht zur Längsrichtung kann die Ermittlung der wirkenden Kräfte und Drehmomente vereinfachen.

Eine besonders bevorzugte Ausführungsform sieht vor, dass mehrere, insbesondere mindestens sechs, beispielsweise genau sechs, Längenelemente zwischen dem ersten Befestigungselement und dem zweiten Befestigungselement angeordnet sind. Dies ermöglicht eine Bestimmung der zwischen den beiden Befestigungselementen wirkenden Kräfte und Drehmomente in und um drei Achsen und somit die Ausbildung als 6-Achs-Kraft-Momentensensor.

Vorteilhafterweise ist das Abtastelement als optisch, kapazitiv, induktiv oder magnetisch abtastender Sensor ausgebildet ist. Insbesondere optische Sensoren sind besonders robust und ermöglichen eine Abtastung mit hoher Auflösung.

Vorzugsweise ist eine Auswerteeinheit vorgesehen, welche die durch das wenigstens eine Abtastelement detektierten Signale auswertet, und insbesondere aus den ermittelten Längenänderungen die zwischen den beiden Befestigungselementen wirkenden Kräfte und Drehmomente berechnet.

Die Erfindung wird anhand der nachfolgenden Figuren ausführlich erläutert. Es zeigen

Figur 1 eine perspektivische Darstellung eines ersten Ausführungsbeispiels einer erfindungsgemäßen Vorrichtung zur Messung einer Längenänderung,

Figur 2 eine weitere perspektivische Darstellung einer Teils der Vorrichtung gemäß Figur 1,

Figur 3 einen Längsschnitt durch die Vorrichtung gemäß Figur 2,

Figur 4 eine schematische Darstellung der Hebelanordnung der Vorrichtung gemäß Figur 1,

Figur 5 eine schematische Darstellung einer Hebelanordnung eines alternativen Ausführungsbeispiels einer Vorrichtung zur Messung einer Längenänderung und

Figur 6 eine perspektivische Ansicht einer Vorrichtung zur Messung einer Längenänderungen mit sechs Längenelementen gemäß Figur 1 zur Bildung eines 6-Achs-Kraft-Momentensensors.

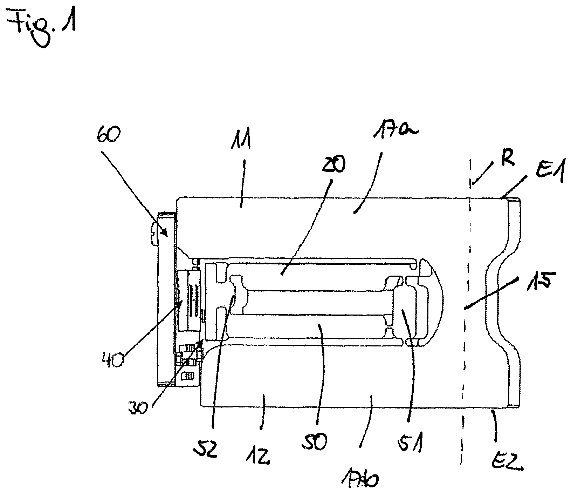

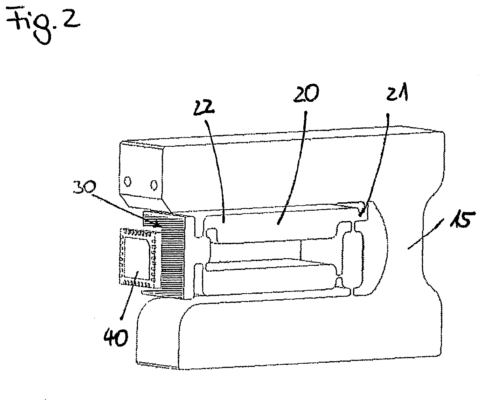

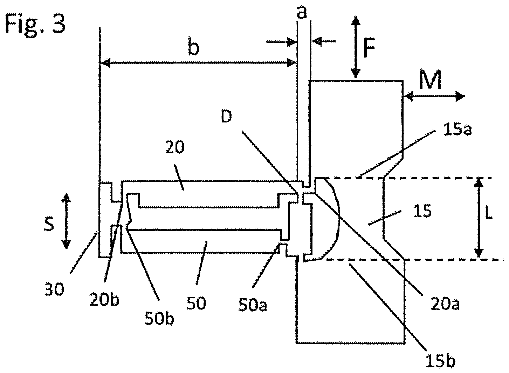

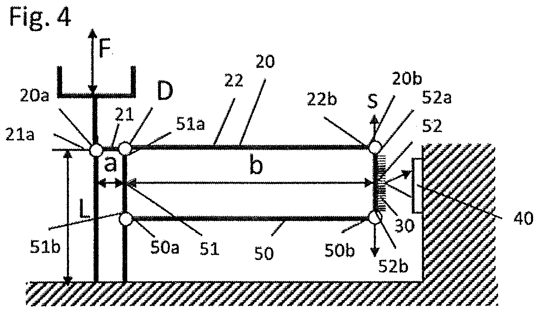

Die Figuren 1 bis 4 zeigen verschiedene Ansichten eines ersten Ausführungsbeispiels einer erfindungsgemäßen Vorrichtung 10 zur Messung einer Längenänderung $\Delta L$ an einem Längenelement 15, welches ein erstes Ende 15a, ein zweites Ende 15b und eine Länge L entlang einer Längsrichtung R aufweist. Eine parallel zur Längsrichtung R wirkende Kraft F führt dabei zu einer Längenänderung $\Delta L$ des Längenelements 15. Eine direkte Messung dieser Längenänderung $\Delta L$ an dem Längenelement 15 ist aufwendig oder kann aufgrund der geringen Längenänderung $\Delta L$ oft nur mit geringer Auflösung erfasst werden. Die dargestellte Vorrichtung 10 umfasst daher ein quer zur Längsrichtung R angeordnetes Hebelelement 20 mit einem ersten Ende 20a, einem zweiten Ende 20b und einem Drehpunkt D, wobei das Hebelelement 20 einen ersten Hebelarm 21 mit einer ersten Länge a zwischen dem Drehpunkt D und einem ersten Hebelarmende 21a und einen zweiten Hebelarm 22 mit einer zweiten Länge b zwischen dem Drehpunkt D und einem zweiten Hebelarmende 22b aufweist. Die zweite Länge b ist größer ausgebildet als die erste Länge a, wobei das Längenelement 15 mit seinem ersten Ende 15a verschwenkbar an dem ersten Hebelarmende 21a des ersten Hebelarms 21 angeordnet ist, während das zweite Hebelarmende 22b des zweiten Hebelarms 22 mit einer Massverkörperung 30 verbunden ist. Die verschwenkbare Anordnung zwischen dem Längenelement 15 und dem ersten Hebelarmende 21a des ersten Hebelarms 21 kann insbesondere nach Art eines Filmscharniers ausgebildet sein. Das Filmscharnier kann beispielsweise durch eine Materialschwächung ausgebildet sein.

Die Vorrichtung 10 umfasst weiterhin ein Abtastelement 40, welches eine Bewegung der Massverkörperung 30 erfasst.

Eine Kraft F, die parallel zur Längsrichtung R auf das Längenelement 15 einwirkt und eine Längenänderung $\Delta L$ am Hebelarmende 21a des kurzen Hebelarms 21 bewirkt, bewirkt aufgrund des Hebelelements 20 eine

Wegänderung ∆s am zweiten Hebelarmende 22b des langen Hebelarms 22. Dabei wird insbesondere die Längenänderung ∆L im Verhältnis b:a verstärkt, die Längenänderung ∆s am zweiten Hebelarmende 22b beträgt somit

$$\Delta s \; = \; b \ast \Delta L / a$$

Die Wegänderung ∆s wird mittels des Abtastelements 40 erfasst, welches die mit dem zweiten Hebelarmende 22b verbundene Massverkörperung 30 abtastet. Insbesondere kann die Massverkörperung 30 optisch abgetastet werden, wozu beispielsweise die Massverkörperung 30 reflektierend ausgebildet sein kann.

Wie in den Figuren 1 bis 4 dargestellt, ist der Drehpunkt D in dieser Ausführungsform zwischen dem ersten Ende 20a und dem zweiten Ende 20b des Hebelelements 20 angeordnet, so dass ein zweiseitiger Hebel ausgebildet wird. Insbesondere bildet dabei das erste Hebelarmende 21a des ersten Hebelarms 21 das erste Ende 20a des Hebelelements 20 und das zweite Hebelarmende 22b des zweiten Hebelarms 22 das zweite Ende 20b des Hebelelements 20.

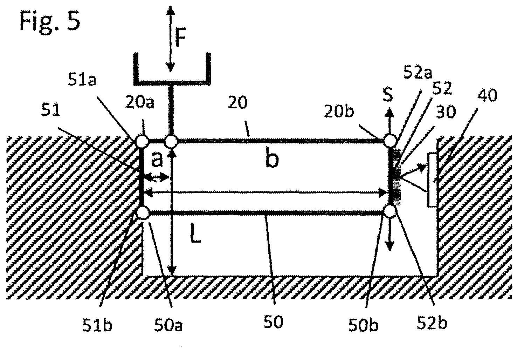

Wie in Figur 5 dargestellt, ist es möglich, dass der Drehpunkt D an dem ersten Ende 20a des Hebelelements 20 angeordnet ist. Dadurch wird ein einseitiger Hebel ausgebildet. Die beiden Hebelarme 21, 22 erstrecken sich ausgehend von dem Drehpunkt D in die gleiche Richtung, jedoch mit unterschiedlicher Länge a bzw. b.

Die Massverkörperung 30 kann stirnseitig an dem Hebelelement 20 angeordnet sein. Das Abtastelement 40 ist derart ausgerichtet, dass es in Richtung der Stirnseite des zweiten Hebelarmendes 22b weist, um die Massverkörperung abtasten zu können. Dabei ist das Abtastelement 40 insbesondere starr fixiert, insbesondere parallel zur Längsrichtung R und starr relativ zu dem Längenelement 15. Bei einer Bewegung des Hebelelements 20 schwenkt jedoch die Massverkörperung 30 um den Drehpunkt D auf einer Kreisbahn, was zu verfälschten Messsignalen im Abtastelement 40 führen kann.

Daher ist vorzugsweise, unabhängig davon, ob das Hebelelement als einseitiger oder zweiseitiger Hebel ausgebildet ist, ein zweites Element 50 vorgesehen, welches ein erstes Ende 50a und ein zweites Ende 50b aufweist, und welches mittels eines ersten Arms 51, der ein erstes Ende 51a und ein zweites Ende 51b aufweist, und eines zu dem ersten Arm 51 parallel ausgerichteten zweiten Arms 52, der ein erstes Ende 52a und ein zweites Ende 52b aufweist, parallel zu dem Hebelelement angeordnet ist. Insbesondere ist das erste Ende 51a des ersten Arms 51 mit dem Drehpunkt D des Hebelelements 20 und das zweite Ende 51b des ersten Arms 51 mit dem ersten Ende 20a des zweiten Elements 50 verbunden, während das erste Ende 52a des zweiten Arms 52 mit dem zweiten Ende 20b des Hebelelements 20 und das zweiten Ende 52b des zweiten Arms 52 mit dem zweiten Ende 50b des zweiten Elements 50 verbunden ist. Dabei sind die Anordnungen zwischen dem zweiten Element 50 und dem ersten Arm 51, dem zweiten Element 50 und dem zweiten Arm 52, dem Hebelelement 20 und dem ersten Arm 51 und zwischen dem Hebelelement 20 und dem zweiten Arm 52 schwenkbar ausgebildet, insbesondere nach Art eines Filmscharniers. Das Filmscharnier kann beispielsweise durch eine Materialschwächung ausgebildet sein.

Die Massverkörperung 30 kann an dem zweiten Arm 52 angeordnet sein und sich vorzugsweise über den Abstand zwischen dem Hebelelement 20 und dem zweiten Element 50 erstrecken. Diese Anordnung bewirkt, dass die Massverkörperung 30 mit dem Hebelelement 20 weiterhin verbunden ist, jedoch vorzugsweise schwenkbar, so dass bei Bewegung des Hebelelements 20 aufgrund einer auf das Längenelement 15 einwirkenden Kraft F weiterhin die Massverkörperung 30 entsprechend dem Übersetzungsverhältnis mitbewegt wird, durch die Führung des zweiten Elements jedoch eine Parallelverschiebung bewirkt wird, so dass die Massverkörperung 30 bei ihrer Bewegung in ihrer Ausrichtung relativ zu dem Abtastelement 40 verbleibt.

Das Abtastelement 40 kann eine Auswerteeinheit 60 umfassen oder mit einer Auswerteeinheit 60 verbunden sein, welche die durch das Abtastelement 40 detektierten Signale auswertet, und insbesondere aus den ermittelten Längenänderungen Dl die auf das Längenelement 15 wirkende Kraft F berechnet.

Um das Abtastelement 30 starr relativ zu dem Längenelement 15 anordnen zu können, sind an dem Längenelement 15 an dem ersten Ende 15a und dem zweiten Ende 15b zwei Querträger 17a, 17b angeordnet, die an der durch das Hebelelement sowie gegebenenfalls das zweite Element und die beiden Arme 51, 52 gebildeten Hebelanordnung diese insbesondere beidseitig umgreifend vorbeigeführt sind, so dass das Abtastelement an den von dem Längenelement 15 abgewandten Enden der Querträger 17a, 17b angeordnet werden kann.

Um die Längenänderung DL bei Einwirken einer Kraft zwischen zwei Komponenten bestimmen zu können, ist das Längenelement 15 an seinem ersten Ende 15a mit einem ersten Befestigungselement 11 und an seinem zweiten Ende 15b mit einem zweiten Befestigungselement 12 verbunden. Wird das erste Befestigungselement 11 mit einer nicht dargestellten ersten Komponente und das zweite Befestigungselement 12 mit einer nicht dargestellten zweiten Komponente verbunden, können bei Bewegung der beiden Komponenten relativ zueinander die dann wirkenden Kräfte bestimmt werden. Das erste Befestigungselement 11 kann durch den ersten Querträger 17a, das zweite Befestigungselement 12 kann durch den zweiten Querträger 17b gebildet sein.

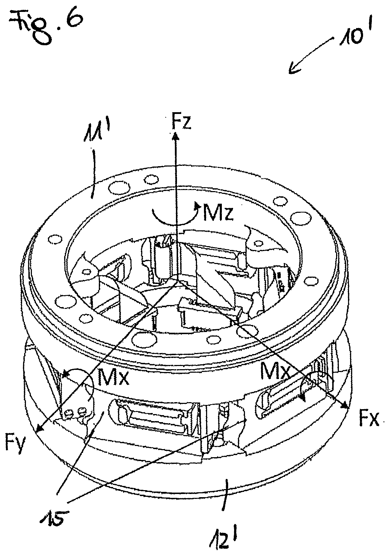

Figur 6 zeigt eine perspektivische Ansicht einer Vorrichtung 10' zur Messung einer Längenänderung ∆L, welche sechs Längenelemente 15 gemäß dem in den Figuren 1 bis 4 dargestellten Ausführungsbeispiel umfasst. Die Vorrichtung 10' weist dabei ein erstes Befestigungselement 11' und ein zweites Befestigungselement 12' auf, wobei die Querträger 17a der sechs Längenelemente 15 mit dem ersten Befestigungselement 11' und die Querträger 17b der sechs Längenelemente 15 mit dem zweiten Befestigungselement 12' verbunden sind. Die Befestigungselements 11', 12' sind scheibenartig, beispielsweise scheibenringartig, mit einer ersten Ebene E1 bzw. einer zweiten Ebene E2, ausgebildet, wobei die Ebenen E1 und E2 parallel zueinander angeordnet sind und insbesondere senkrecht zur Längsrichtung R der Längenelemente 15 angeordnet sind. Die Längenelemente 15 sind gleichmäßig über den Umfang der Befestigungselemente 11', 12' verteilt angeordnet und bilden insbesondere einen 6-Achs-Kraft-Momentensensor. Dazu werden der Auswerteeinheit 60 die von sämtlichen sechs Abtastelemente 40 detektierten Signale zugeführt, aus welchen die zwischen den beiden Befestigungselementen 11', 12' wirkenden Kräfte Fx, Fy, Fz und Drehmomente Mx, My, Mz bei entsprechender Kalibrierung berechnet werden können.

Bezugszeichenliste

| | |
|---|---|
| 10 | Vorrichtung |
| 10' | Vorrichtung |
| 11, 11' | erstes Befestigungselement |
| 12, 12' | zweites Befestigungselement |
| 15 | Längenelement |
| 15a | erstes Ende |
| 15b | zweites Ende |
| 20 | Hebelelement |
| 20a | erstes Ende |
| 20b | zweites Ende |
| 21 | erster Hebelarm |
| 21a | erstes Hebelarmende |
| 22 | zweiter Hebelarm |
| 22a | zweites Hebelarmende |
| 30 | Massverkörperung |
| 40 | Abtastelement |
| 50 | zweites Element |
| 50a | erstes Ende |
| 50b | zweites Ende |
| 51 | erster Arm |
| 51a | erstes Ende |
| 51b | zweites Ende |
| 52 | zweiter Arm |
| 52a | erstes Ende |
| 52b | zweites Ende |
| 60 | Auswerteeinheit |
| L | Länge |
| $\Delta L$ | Längenänderung |
| R | Längsrichtung |
| F | Kraft |
| M | Drehmoment |
| D | Drehpunkt |
| s | Weg |
| $\Delta s$ | Wegänderung |
| a | erste Länge |
| b | zweite Länge |
| E1 | erste Ebene |
| E2 | zweite Ebene |

**Patentansprüche**

1. Vorrichtung (10, 10') zur Messung einer Längenänderung ($\Delta L$) mit einem ersten Befestigungselement (11, 11'), einem zweiten Befestigungselement (12, 12') und wenigstens einem zwischen den beiden Befestigungselementen (11, 11', 12, 12') angeordneten Längenelement (15) mit einem ersten Ende (15a), einem zweiten Ende (15b) und einer Länge (L) entlang einer Längsrichtung (R), wobei eine parallel zur Längsrichtung (R) wirkende Kraft (F) zu einer Längenänderung ($\Delta L$) des Längenelements (15) führt,
**dadurch gekennzeichnet, dass** quer zur Längsrichtung (R) ein Hebelelement (20) mit einem ersten Ende (20a), einem zweiten Ende (20b) und einem Drehpunkt (D) angeordnet ist, wobei das Hebelelement (20) einen ersten Hebelarm (21) mit einer ersten Länge (a) zwischen dem Drehpunkt (D) und einem ersten Hebelarmende (21a) und einen zweiten Hebelarm (22) mit einer zweiten Länge (b) zwischen dem Drehpunkt (D) und einem zweiten Hebelarmende (22b) aufweist, wobei die zweite Länge (b) größer ausgebildet ist als die erste Länge (a), wobei das Längenelement (15) mit seinem ersten Ende (15a) verschwenkbar am ersten Hebelarmende (21a) des ersten Hebelarms angeordnet (21) ist und wobei das zweite Hebelarmende (22b) des zweiten Hebelarms (22) mit einer Massverkörperung (30) verbunden ist, wobei die Vorrichtung (10) ein Abtastelement (40) umfasst, welches die Bewegung der Maßverkörperung (30) erfasst.

2. Vorrichtung nach einem der vorhergehenden Ansprüche, **dadurch gekennzeichnet, dass** der Drehpunkt (D) zwischen dem ersten Ende (20a) und dem zweiten Ende (20b) des Hebelelements (20) angeordnet ist und das erste Hebelarmende (21a) des ersten Hebelarms (21) das erste Ende (20a) des Hebelelements (20) und das zweite Hebelarmende (22b) des zweiten Hebelarms (22) das zweite Ende (20b) des Hebelelements (20) bildet.

3. Vorrichtung nach einem der vorhergehenden Ansprüche, **dadurch gekennzeichnet, dass** der Drehpunkt (D) an dem ersten Ende (20a) des Hebelelements (20) angeordnet ist.

4. Vorrichtung nach einem der vorhergehenden Ansprüche, **dadurch gekennzeichnet, dass** ein zweites Element (50), welches ein erstes Ende (50a) und ein zweites Ende (50b) aufweist und welches mittels eines ersten Arms (51) und eines zweiten Arms (52), welche parallel zueinander ausgerichtet sind, parallel zu dem Hebelelement (20) angeordnet ist, wobei die Anordnung zwischen dem zweiten Element (50) und dem ersten Arm (51), zwischen dem zweiten Element (50) und dem zweiten Arm (52), zwischen dem Hebelelement (20) und dem ersten Arm (51) und zwischen dem Hebelelement (20) und dem zweiten Arm (52) schwenkbar ist.

5. Vorrichtung nach einem der vorhergehenden Ansprüche, **dadurch gekennzeichnet, dass** die Massverkörperung (30) an dem zweiten Arm (52) angeordnet ist und sich vorzugsweise über den Abstand zwischen dem Hebelelement (20) und dem zweiten Element (50) erstreckt.

6. Vorrichtung nach einem der vorhergehenden Ansprüche, **dadurch gekennzeichnet, dass** der erste Arm (51) zwischen dem Drehpunkt (D) und dem ersten Ende (50a) des zweiten Elements (50) und der zweite Arm (52) zwischen dem zweiten Ende (20b) des Hebelelements (20) und dem zweiten Ende (50b) des zweiten Elements (50) angeordnet ist.

7. Vorrichtung nach einem der vorhergehenden Ansprüche, **dadurch gekennzeichnet, dass** die schwenkbare Verbindungen nach Art eines Filmscharniers ausgebildet sind.

8. Vorrichtung nach einem der vorhergehenden Ansprüche, **dadurch gekennzeichnet, dass** das erste Befestigungselement (11, 11') scheibenartig mit einer ersten Ebene (E1) und das zweite Befestigungselement (12, 12') scheibenartig mit einer zweiten Ebene (E2) ausgebildet sind, wobei die erste Ebene (E1) und die zweite Ebene (E2) parallel zueinander angeordnet sind und vorzugsweise die Längsrichtung (R) senkrecht zu den Ebenen (E1, E2) angeordnet ist.

9. Vorrichtung nach einem der vorhergehenden Ansprüche, **dadurch gekennzeichnet, dass** mehrere, insbesondere sechs, Längenelemente (15) zwischen dem ersten Befestigungselement (11') und dem zweiten Befestigungselement (12') angeordnet sind.

10. Vorrichtung nach einem der vorhergehenden Ansprüche, **dadurch gekennzeichnet, dass** das Abtastelement (40) als optisch, kapazitiv, induktiv oder magnetisch abtastender Sensor ausgebildet ist.

11. Vorrichtung nach einem der vorhergehenden Ansprüche, **dadurch gekennzeichnet, dass** eine Auswerteeinheit (60) vorgesehen ist, welche die durch das wenigstens eine Abtastelement (40) detektierten Signale auswertet, und insbesondere aus den ermittelten Längenänderungen die zwischen den beiden Befestigungselementen wirkenden Kräfte und Drehmomente berechnet.

## Claims

1. Device (10, 10') for measuring a length change ($\Delta L$), comprising a first fastening element (11, 11'), a second fastening element (12, 12'), and at least one length element (15) that is arranged between the two fastening elements (11, 11', 12, 12') and has a first end (15a), a second end (15b) and a length (L) along a length direction (R), wherein a force (F) acting in parallel with the length direction (R) leads to a length change ($\Delta L$) of the length element (15), **characterised in that** a lever element (20) having a first end (20a), a second end (20b) and a fulcrum (D) is arranged transversely to the length direction (R), wherein the lever element (20) comprises a first lever arm (21) of a first length (a) between the fulcrum (D) and a first lever arm end (21a), and a second lever arm (22) of a second length (b) between the fulcrum (D) and a second lever arm end (22b), wherein the second length (b) is greater than the first length (a), wherein the length element (15) is arranged with its first end (15a) pivotably on the first lever arm end (21a) of the first lever arm (21), and wherein the second lever arm end (22b) of the second lever arm (22) is connected to an material measure (30), wherein the device (10) comprises a scanning element (40) which detects the movement of the material measure (30).

2. Device according to any of the preceding claims, **characterised in that** the fulcrum (D) is arranged between the first end (20a) and the second end (20b) of the lever element (20), and the first lever arm end (21a) of the first lever arm (21) forms the first end (20a) of the lever element (20), and the second lever arm end (22b) of the second lever arm (22) forms the second end (20b) of the lever element (20).

3. Device according to any of the preceding claims, **characterised in that** the fulcrum (D) is arranged at the first end (20a) of the lever element (20).

4. Device according to any of the preceding claims, **characterised in that** a second element (5) which comprises a first end (50a) and a second end (50b) and which is arranged in parallel with the lever element (20) by means of a first arm (51) and a second arm (52) oriented in parallel with one another, wherein the arrangement is pivotable between the second element (50) and the first arm (51), between the second element (50) and the second arm (52), between the lever element (30) and the first arm (51), and between the lever element (20) and the second arm (52).

5. Device according to any of the preceding claims, **characterised in that** the material measure(30) is arranged on the second arm (52) and preferably extends over the spacing between the lever element (20) and the second element (50).

6. Device according to any of the preceding claims, **characterised in that** the first arm (51) is arranged between the fulcrum (D) and the first end (50a) of the second element (50), and the second arm (52) is arranged between the second end (20b) of the lever element (20) and the second end (50bb) of the second element (50).

7. Device according to any of the preceding claims, **characterised in that** the pivotable connections are formed in the manner of a film hinge.

8. Device according to any of the preceding claims, **characterised in that** the first fastening element (11, 11') is configured in a wafer-like manner having a first plane (E1), and the second fastening element (12, 12') is configured in a wafer-like manner having a second plane (E2), wherein the first plane (E1) and the second plane (E2) are arranged in parallel with one another and the length direction (R) is preferably arranged perpendicularly to the planes (E1, E2).

9. Device according to any of the preceding claims, **characterised in that** a plurality of, in particular six, length elements (15) are arranged between the first fastening element (11') and the second fastening element (12').

10. Device according to any of the preceding claims, **characterised in that** the scanning element (40) is configured as an optically, capacitively, inductively or magnetically scanning sensor.

11. Device according to any of the preceding claims, **characterised in that** an evaluation unit (60) is provided, which evaluates the signals detected by the at least one scanning element (40), and in particular calculates the forces and torques acting between the two fastening elements, from the determined length changes.

**Revendications**

1. Dispositif (10, 10') de mesure d'une variation (ΔL) de longueur comprenant un premier élément (11, 11') de fixation et un deuxième élément (12, 12') de fixation et au moins un élément (15) longitudinal disposé entre les deux éléments (11, 11', 12, 12') de fixation et ayant une première extrémité (15a), une deuxième extrémité (15b) et une longueur (L) le long d'une direction (R) en longueur, dans lequel une force (F) s'appliquant parallèlement à la direction (R) en longueur entraîne une variation (ΔL) de longueur de l'élément (15) longitudinal, **caractérisé en ce qu'**un élément (20) de levier, ayant une première extrémité (20a), une deuxième extrémité (20b) et un point (D) d'appui, est disposé transversalement à la direction (R) en longueur, dans lequel l'élément (20) de levier a un premier bras (21) de levier, ayant une première longueur (a) entre le point (D) d'appui et une première extrémité (21a) du bras de levier, et un deuxième bras (22) de levier, ayant une deuxième longueur (b) entre le point (D) d'appui et une deuxième extrémité (22b) du bras de levier, dans lequel la deuxième longueur (b) est plus grande que la première longueur (a), dans lequel l'élément (15) longitudinal est, par sa première extrémité (15a), monté pivotant sur la première extrémité (21a) du premier bras de levier, et dans lequel la deuxième extrémité (22b) du deuxième bras (22) de levier est reliée à une mesure (30) matérialisée, dans lequel le dispositif (10) comprend un élément (40) de balayage, qui détecte le déplacement de la mesure (30) matérialisée.

2. Dispositif suivant l'une des revendications précédentes, **caractérisé en ce que** le point (D) d'appui est disposé entre la première extrémité (20a) et la deuxième extrémité (20b) de l'élément (20) de levier et **en ce que** la première extrémité (21a) du premier bras (21) de levier forme la première extrémité (20a) de l'élément (20) de levier et la deuxième extrémité (22b) du deuxième bras (22) de levier forme la deuxième extrémité (20b) de l'élément (20) de levier.

3. Dispositif suivant l'une des revendications précédentes, **caractérisé en ce que** le point (D) d'appui est disposé à la première extrémité (20a) de l'élément (20) de levier.

4. Dispositif suivant l'une des revendications précédentes, **caractérisé en ce qu'**un deuxième élément (50), qui a une première extrémité (50a) et une deuxième extrémité (50b) et qui est, au moyen d'un premier bras (51) et d'un deuxième bras (52), qui sont dirigés parallèlement entre eux, disposé parallèlement à l'élément (20) de levier, dans lequel l'agencement est pivotant entre le deuxième élément (50) et le premier bras (51), entre le deuxième élément (50) et le deuxième bras (52), entre l'élément (20) de levier et le premier bras (51) et entre l'élément (20) de levier et le deuxième bras (52).

**5.** Dispositif suivant l'une des revendications précédentes, **caractérisé en ce que** la mesure (30) matérialisée est disposée sur le deuxième bras (52) et s'étend de préférence sur la distance comprise entre l'élément (20) de levier et le deuxième élément (50).

**6.** Dispositif suivant l'une des revendications précédentes, **caractérisé en ce que** le premier bras (51) est disposé entre le point (D) d'appui et la première extrémité (50a) du deuxième élément (50) et le deuxième bras (52) entre la deuxième extrémité (20b) de l'élément (20) de levier et la deuxième extrémité (50b) du deuxième élément (50).

**7.** Dispositif suivant l'une des revendications précédentes, **caractérisé en ce que** les liaisons à pivotement sont constituées à la manière d'une charnière souple.

**8.** Dispositif suivant l'une des revendications précédentes, **caractérisé en ce que** le premier élément (11, 11') de fixation est formé en étant du type à disque en ayant un premier plan (E1) et le deuxième élément (12, 12') de fixation est formé en étant du type à disque en ayant un deuxième plan (E2), dans lequel le premier plan (E1) et le deuxième plan (E2) sont parallèles entre eux et de préférence la direction (R) en longueur est perpendiculaire aux plans (E1, E2).

**9.** Dispositif suivant l'une des revendications précédentes, **caractérisé en ce que** plusieurs, en particulier six, éléments (15) longitudinaux sont disposés entre le premier élément (11') de fixation et le deuxième élément (12') de fixation.

**10.** Dispositif suivant l'une des revendications précédentes, **caractérisé en ce que** l'élément (40) de balayage est constitué sous la forme d'un capteur balayant de manière optique capacitive, inductive, ou magnétique.

**11.** Dispositif suivant l'une des revendications précédentes, **caractérisé en ce qu'**il est prévu une unité (60) d'évaluation, qui évalue les signaux détectés par au moins un élément (40) de balayage et calcule, en particulier à partir des variations de longueur déterminées, les forces et couples s'appliquant entre les deux éléments de fixation.

Fig. 1

Fig. 2

Fig. 3

Fig. 4

Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4544858 A